# EUROPEAN PATENT APPLICATION

(11) **EP 3 934 308 A1**
(43) Date of publication of application: **05.01.2022**
(21) Application number: 20777807.7
(22) Date of filing: 11.03.2020
(51) Int. Cl.: H04W 16/28

(54) **COVERAGE ADJUSTMENT METHOD, APPARATUS AND SYSTEM**

(30) Priority: 28.03.2019 CN 201910245711
(71) Applicant: Huawei Technologies Co., Ltd., Shenzhen, Guangdong 518129 (CN)
(72) Inventor: SHI, Xiaoli, Shenzhen, Guangdong 518129 (CN); ZENG, Qinghai, Shenzhen, Guangdong 518129 (CN); YOU, Chunhua, Shenzhen, Guangdong 518129 (CN)
(74) Representative: Pfenning, Meinig & Partner mbB
(86) International application number: PCT/CN2020/078813
(87) International publication number: WO 2020/192424

(57) **Abstract**

A coverage adjustment method, apparatus, and system are provided. The method includes: A first network device obtains measurement information for measuring a cell by a terminal device, where the measurement information includes channel state information CSI, radio resource management RRM information, and location information of the terminal device; and the first network device determines a beam coverage adjustment parameter of the first network device based on the measurement information. Accuracy of network coverage adjustment is improved.

## Description

This application claims priority to Chinese Patent Application No. 201910245711.8, filed with the Chinese Patent Office on March 28, 2019 and entitled "COVERAGE ADJUSTMENT METHOD, APPARATUS, AND SYSTEM", which is incorporated herein by reference in its entirety.

### TECHNICAL FIELD

This application relates to the field of communication technologies, and in particular, to a coverage adjustment method, apparatus, and system.

### BACKGROUND

In a wireless communication system, to enable a network device (for example, a base station) to provide a good network service for a terminal device, coverage of the network device may be optimized.

In a new radio (new radio, NR) access technology, a plurality of synchronization signal blocks (synchronization signal block, SSB) may be transmitted on one frequency domain carrier, and each SSB further corresponds to a plurality of beams. A terminal accesses a network on a specific beam based on a configuration of a base station. Therefore, after an existing coverage optimization method is used, problems of weak coverage, overshoot coverage, and imbalance between uplink and downlink transmission in a cell still exist, resulting in a relatively poor effect of network coverage optimization in a conventional technology.

### SUMMARY

This application provides a coverage adjustment method, apparatus, and system, to improve accuracy of network coverage adjustment.

According to a first aspect, an embodiment of this application provides a coverage adjustment method. A first network device may obtain measurement information for measuring a cell by a terminal device, and determine a beam coverage adjustment parameter of the first network device based on the measurement information. The measurement information includes channel state information CSI, radio resource management RRM information, and location information of the terminal device.

In the foregoing process, the measurement information includes the CSI, the RRM information, and the location information of the terminal device. In this way, after obtaining the measurement information, the first network device may determine a coverage status at each location within coverage of the first network device based on the measurement information, so that the first network device can accurately adjust cell coverage and/or beam coverage of the first network device, thereby improving accuracy of network coverage adjustment.

In a possible implementation, the measurement information further includes a measurement moment. In this way, the first network device may determine, based on the measurement information, the coverage status of the first network device at each location and a coverage status of the first network device in each time period, so that the first network device can accurately adjust the cell coverage and/or the beam coverage of the first network device, thereby improving the accuracy of network coverage adjustment.

In a possible implementation, the RRM information includes at least one of the following information: an identifier of the cell, a measurement result of the cell, a timing advance TA, or power headroom PHR.

In a possible implementation, the measurement result includes a measurement result of a cell granularity and/or a measurement result of a beam granularity, and the measurement result of the cell granularity and the measurement result of the beam granularity include at least one of the following information: signal strength or signal quality.

In a possible implementation, the CSI includes at least one of the following information: a precoding matrix indicator PMI, indication information indicating a rank in an antenna matrix, and a channel quality indicator CQI.

In the foregoing process, the information included in the RRM information and the information included in the CSI can fully reflect the coverage status of the first network device, so that the first network device can accurately adjust the cell coverage and/or the beam coverage of the first network device, thereby improving the accuracy of network coverage adjustment.

In a possible implementation, after the first network device obtains the measurement information for measuring the cell by the terminal device, the first network device determines a coverage detection result of the cell based on the RRM information and the location information. The first network device may further determine the beam coverage adjustment parameter based on the coverage detection result, and accurately adjust the cell coverage and/or the beam coverage of the first network device based on the beam coverage adjustment parameter. The coverage detection result includes at least one of the following: weak coverage, overshoot coverage, or imbalance between uplink and downlink transmission.

In the foregoing process, the coverage detection result is first determined, and then the cell coverage and/or the beam coverage of the first network device are/is accurately adjusted based on the coverage detection result. In this way, more targeted adjustment of the cell coverage and/or the beam coverage of the first network device can be implemented, thereby improving the accuracy of network coverage adjustment.

In a possible implementation, the cell includes a serving cell of the terminal device and/or a neighboring cell of the serving cell.

In a possible implementation, the beam coverage adjustment parameter includes at least one of the following parameters: a state of an antenna element, a phase difference of an antenna, or a precoding matrix of an antenna; and the state of the antenna element includes an active state and an inactive state.

In the foregoing process, the beam coverage adjustment parameter includes at least one of the foregoing three parameters, so that the first device can accurately adjust the cell coverage and/or the beam coverage of the first network device based on the beam coverage adjustment parameter, thereby improving the accuracy of network coverage adjustment.

In a possible implementation, the first network device is a CU, and the CU sends the beam coverage adjustment parameter to a DU corresponding to the CU.

According to a second aspect, an embodiment of this application provides a coverage adjustment method. A first network device may obtain coverage indication information of a second network device, and determine a beam coverage adjustment parameter of the first network device based on the coverage indication information.

In the foregoing process, the first network device may obtain a coverage status of the second network device based on the coverage indication information of the second network device, and then accurately adjust coverage of the first network device based on the coverage status of the second network device, thereby improving accuracy of network coverage adjustment.

In a possible implementation, the coverage indication information includes an identifier of a beam corresponding to the second network device and a beam status corresponding to the second network device.

In a possible implementation, the beam status includes at least one of a beam coverage state, a beam deployment status indicator, or beam replacing information.

In the foregoing process, content included in the coverage indication information can fully reflect the coverage status of the second network device based on a beam granularity, so that the first network device can accurately adjust the coverage of the first network device based on the coverage status of the second network device, thereby improving the accuracy of network coverage adjustment.

In a possible implementation, the coverage indication information includes an identifier of a cell corresponding to the second network device, frequency information of the cell corresponding to the second network device, and a cell status corresponding to the second network device.

In a possible implementation, the cell status includes at least one of a cell coverage state, a cell deployment status indicator, and cell replacing information.

In the foregoing process, content included in the coverage indication information can fully reflect the coverage status of the second network device based on a cell granularity, so that the first network device can accurately adjust the coverage of the first network device based on the coverage status of the second network device, thereby improving the accuracy of network coverage adjustment.

In a possible implementation, the beam coverage adjustment parameter includes at least one of the following parameters: a state of an antenna element, a phase difference of an antenna, or a precoding matrix of an antenna; and the state of the antenna element includes an active state and an inactive state.

In the foregoing process, the beam coverage adjustment parameter includes at least one of the foregoing three parameters, so that the first device can accurately adjust cell coverage and/or beam coverage of the first network device based on the beam coverage adjustment parameter, thereby improving accuracy of network coverage adjustment.

In a possible implementation, the first network device is a CU, and the CU sends the beam coverage adjustment parameter to a DU corresponding to the CU.

According to a third aspect, an embodiment of this application provides a coverage adjustment method. A terminal device may obtain measurement information for measuring a cell, and send the measurement information to a network device. The measurement information includes channel state information CSI, radio resource management RRM information, and location information of the terminal device.

In the foregoing process, the measurement information includes the CSI, the RRM information, and the location information of the terminal device. In this way, after obtaining the measurement information, the first network device may determine a coverage status at each location within coverage of the first network device based on the measurement information, so that the first network device can accurately adjust cell coverage and/or beam coverage of the first network device, thereby improving accuracy of network coverage adjustment.

Optionally, the measurement information is used to enable the network device to adjust the cell coverage and/or the beam coverage of the network device based on the measurement information. For example, the measurement information is used to enable the network device to determine a beam coverage adjustment parameter of the network device based on the measurement information, and adjust the cell coverage and/or the beam coverage of the network device based on the beam coverage adjustment parameter.

In a possible implementation, the measurement information further includes a measurement moment.

Because the measurement information further includes the measurement moment, the first network device may determine, based on the measurement information, the coverage status of the first network device at each location and a coverage status of the first network device in each time period, so that the first network device can accurately adjust the cell coverage and/or the beam coverage of the first network device, thereby improving the accuracy of network coverage adjustment.

In a possible implementation, the RRM information includes at least one of the following information: an identifier of the cell, a measurement result of the cell, a timing advance TA, or power headroom PHR.

In a possible implementation, the measurement result includes a measurement result of a cell granularity and/or a measurement result of a beam granularity, and the measurement result of the cell granularity and the measurement result of the beam granularity include at least one of the following information: signal strength or signal quality.

In a possible implementation, the CSI includes at least one of the following information: a precoding matrix indicator PMI, indication information indicating a rank in an antenna matrix, and a channel quality indicator CQI.

In the foregoing process, the information included in the RRM information and the information included in the CSI can fully reflect the coverage status of the first network device, so that the first network device can accurately adjust the cell coverage and/or the beam coverage of the first network device, thereby improving the accuracy of network coverage adjustment.

In a possible implementation, the cell includes a serving cell of the terminal device and/or a neighboring cell of the serving cell.

According to a fourth aspect, an embodiment of this application provides a coverage adjustment method. A second network device obtains coverage indication information, and sends the coverage indication information to a first network device. The coverage indication information is used by the first network device to determine a beam coverage adjustment parameter of the first network device.

In the foregoing process, after the second network device sends the coverage indication information to the first network device, the first network device may obtain a coverage status of the second network device based on the coverage indication information of the second network device, and then accurately adjust coverage of the first network device based on the coverage status of the second network device, thereby improving accuracy of network coverage adjustment.

In a possible implementation, the coverage indication information includes an identifier of a beam corresponding to the second network device and a beam status corresponding to the second network device.

In a possible implementation, the beam status includes at least one of a beam coverage state, a beam deployment status indicator, or beam replacing information.

In the foregoing process, content included in the coverage indication information can fully reflect the coverage status of the second network device based on a beam granularity, so that the first network device can accurately adjust the coverage of the first network device based on the coverage status of the second network device, thereby improving the accuracy of network coverage adjustment.

In a possible implementation, the coverage indication information includes an identifier of a cell corresponding to the second network device, frequency information of the cell corresponding to the second network device, and a cell status corresponding to the second network device.

In a possible implementation, the cell status includes at least one of a cell coverage state, a cell deployment status indicator, and cell replacing information.

In the foregoing process, content included in the coverage indication information can fully reflect the coverage status of the second network device based on a cell granularity, so that the first network device can accurately adjust the coverage of the first network device based on the coverage status of the second network device, thereby improving the accuracy of network coverage adjustment.

According to a fifth aspect, an embodiment of this application provides a coverage adjustment apparatus, including a receiving module and a processing module.

The receiving module is configured to obtain measurement information for measuring a cell by a terminal device, where the measurement information includes channel state information CSI, radio resource management RRM information, and location information of the terminal device.

The processing module is configured to determine a beam coverage adjustment parameter of a first network device based on the measurement information.

In a possible implementation, the measurement information further includes a measurement moment.

In a possible implementation, the RRM information includes at least one of the following information: an identifier of the cell, a measurement result of the cell, a timing advance TA, or power headroom PHR.

In a possible implementation, the measurement result includes a measurement result of a cell granularity and/or a measurement result of a beam granularity, and the measurement result of the cell granularity and the measurement result of the beam granularity include at least one of the following information: signal strength or signal quality.

In a possible implementation, the processing module is further configured to: after the receiving module obtains the measurement information for measuring the cell by the terminal device, determine a coverage detection result of the cell based on the RRM information and the location information, where the coverage detection result includes at least one of the following: weak coverage, overshoot coverage, or imbalance between uplink and downlink transmission.

In a possible implementation, the cell includes a serving cell of the terminal device and/or a neighboring cell of the serving cell.

In a possible implementation, the CSI includes at least one of the following information: a precoding matrix indicator PMI, indication information indicating a rank in an antenna matrix, and a channel quality indicator CQI.

In a possible implementation, the beam coverage adjustment parameter includes at least one of the following parameters: a state of an antenna element, a phase difference of an antenna, or a precoding matrix of an antenna; and the state of the antenna element includes an active state and an inactive state.

In a possible implementation, the first network device is a CU, and the CU sends the beam coverage adjustment parameter to a DU corresponding to the CU.

According to a sixth aspect, an embodiment of this application provides a coverage adjustment apparatus, including a receiving module and a processing module.

The receiving module is configured to obtain coverage indication information of a second network device.

The processing module is configured to determine a beam coverage adjustment parameter of the first network device based on the coverage indication information.

In a possible implementation, the coverage indication information includes an identifier of a beam corresponding to the second network device and a beam status corresponding to the second network device.

In a possible implementation, the beam status includes at least one of a beam coverage state, a beam deployment status indicator, or beam replacing information.

In a possible implementation, the coverage indication information includes an identifier of a cell corresponding to the second network device, frequency information of the cell corresponding to the second network device, and a cell status corresponding to the second network device.

In a possible implementation, the cell status includes at least one of a cell coverage state, a cell deployment status indicator, and cell replacing information.

In a possible implementation, the beam coverage adjustment parameter includes at least one of the following parameters: a state of an antenna element, a phase difference of an antenna, or a precoding matrix of an antenna; and the state of the antenna element includes an active state and an inactive state.

In a possible implementation, the first network device is a CU, and the apparatus further includes a sending module.

The sending module is configured to send the beam coverage adjustment parameter to a DU corresponding to the CU.

According to a seventh aspect, an embodiment of this application provides a coverage adjustment apparatus, including a processing module and a sending module.

The processing module is configured to obtain measurement information for measuring a cell, where the measurement information includes channel state information CSI, radio resource management RRM information, and location information of the terminal device.

The sending module is configured to send the measurement information to a network device.

In a possible implementation, the measurement information further includes a measurement moment.

In a possible implementation, the RRM information includes at least one of the following information: an identifier of the cell, a measurement result of the cell, a timing advance TA, or power headroom PHR.

In a possible implementation, the measurement result includes a measurement result of a cell granularity and/or a measurement result of a beam granularity, and the measurement result of the cell granularity and the measurement result of the beam granularity include at least one of the following information: signal strength or signal quality.

In a possible implementation, the CSI includes at least one of the following information: a precoding matrix indicator PMI, indication information indicating a rank in an antenna matrix, and a channel quality indicator CQI.

In a possible implementation, the cell includes a serving cell of the terminal device and/or a neighboring cell of the serving cell.

According to an eighth aspect, an embodiment of this application provides a coverage adjustment apparatus, including a processing module and a sending module.

The processing module is configured to obtain coverage indication information.

The sending module is configured to send the coverage indication information to a first network device.

In a possible implementation, the coverage indication information includes an identifier of a beam corresponding to the second network device and a beam status corresponding to the second network device.

In a possible implementation, the beam status includes at least one of a beam coverage state, a beam deployment status indicator, or beam replacing information.

In a possible implementation, the coverage indication information includes an identifier of a cell corresponding to the second network device, frequency information of the cell corresponding to the second network device, and a cell status corresponding to the second network device.

In a possible implementation, the cell status includes at least one of a cell coverage state, a cell deployment status indicator, and cell replacing information.

According to a ninth aspect, an embodiment of this application provides a coverage adjustment apparatus, including a memory, a processor, a receiver, and a transmitter. The processor executes program instructions in the memory to implement the coverage adjustment method according to any one of the implementations of the first aspect.

According to a tenth aspect, an embodiment of this application provides a coverage adjustment apparatus, including a memory, a processor, a receiver, and a transmitter. The processor executes program instructions in the memory to implement the coverage adjustment method according to any one of the implementations of the second aspect.

According to an eleventh aspect, an embodiment of this application provides a coverage adjustment apparatus, including a memory, a processor, a receiver, and a transmitter. The processor executes program instructions in the memory to implement the coverage adjustment method according to any one of the implementations of the third aspect.

According to a twelfth aspect, an embodiment of this application provides a coverage adjustment apparatus, including a memory, a processor, a receiver, and a transmitter. The processor executes program instructions in the memory to implement the coverage adjustment method according to any one of the implementations of the fourth aspect.

According to a thirteenth aspect, an embodiment of this application provides a storage medium. The storage medium is configured to store a computer program, and the computer program is used to implement the coverage adjustment method according to any one of the implementations of the first aspect.

According to a fourteenth aspect, an embodiment of this application provides a storage medium. The storage medium is configured to store a computer program, and the computer program is used to implement the coverage adjustment method according to any one of the implementations of the second aspect.

According to a fifteenth aspect, an embodiment of this application provides a storage medium. The storage medium is configured to store a computer program, and the computer program is used to implement the coverage adjustment method according to any one of the implementations of the third aspect.

According to a sixteenth aspect, an embodiment of this application provides a storage medium. The storage medium is configured to store a computer program, and the computer program is used to implement the coverage adjustment method according to any one of the implementations of the fourth aspect.

According to a seventeenth aspect, an embodiment of this application provides a coverage adjustment system. The coverage adjustment system includes a terminal device and a network device. The terminal device is configured to send measurement information to the network device, and the network device is configured to perform the coverage adjustment method according to any one of the implementations of the first aspect, where the measurement information includes channel state information CSI, radio resource management RRM information, and location information of the terminal device.

According to an eighteenth aspect, an embodiment of this application provides a coverage adjustment system. The coverage adjustment system includes a first network device and a second network device, where the first network device is configured to send coverage indication information to the second network device, and the second network device is configured to perform the coverage adjustment method according to any one of the implementations of the second aspect.

According to the coverage adjustment method, apparatus, and system provided in the embodiments of this application, the first network device may obtain the measurement information for measuring the cell by the terminal device, determine the beam coverage adjustment parameter of the first network device based on the measurement information, and adjust the cell coverage and/or the beam coverage of the first network device based on the beam coverage adjustment parameter. The measurement information includes the CSI, the RRM information, and the location information of the terminal device. In this way, after obtaining the measurement information, the first network device may determine the coverage status at each location within the coverage of the first network device based on the measurement information, so that the first network device can accurately adjust the cell coverage and/or the beam coverage of the first network device. Therefore, the accuracy of coverage adjustment is higher, and the accuracy of network coverage adjustment is improved.

### BRIEF DESCRIPTION OF DRAWINGS

FIG. 1 is an architectural diagram of a 5G communication system based on a CU-DU split base station according to an embodiment of this application;
FIG. 2A is a schematic diagram of a radiation direction of an element according to an embodiment of this application;
FIG. 2B is another schematic diagram of a radiation direction of an element according to an embodiment of this application;
FIG. 3 is a schematic diagram of a beam according to an embodiment of this application;
FIG. 4 is an architectural diagram of a communication system according to an embodiment of this application;
FIG. 5 is a schematic flowchart of a coverage adjustment method according to an embodiment of this application;
FIG. 6 is a schematic flowchart of another coverage adjustment method according to an embodiment of this application;
FIG. 7 is a schematic diagram of overshoot coverage according to an embodiment of this application;
FIG. 8 is a schematic diagram of imbalance between uplink and downlink transmission according to an embodiment of this application;
FIG. 9 is a schematic flowchart of still another coverage adjustment method according to an embodiment of this application;
FIG. 10 is a schematic flowchart of yet another coverage adjustment method according to an embodiment of this application;
FIG. 11 is a schematic flowchart of another coverage adjustment method according to an embodiment of this application;
FIG. 12 is a schematic structural diagram of a coverage adjustment apparatus according to an embodiment of this application;
FIG. 13 is a schematic structural diagram of another coverage adjustment apparatus according to an embodiment of this application;
FIG. 14 is a schematic structural diagram of still another coverage adjustment apparatus according to an embodiment of this application;
FIG. 15 is a schematic structural diagram of another coverage adjustment apparatus according to an embodiment of this application;
FIG. 16 is a schematic structural diagram of hardware of a coverage adjustment apparatus according to an embodiment of this application;
FIG. 17 is a schematic structural diagram of hardware of another coverage adjustment apparatus according to an embodiment of this application; and
FIG. 18 is a schematic structural diagram of hardware of still another coverage adjustment apparatus according to an embodiment of this application.

### DESCRIPTION OF EMBODIMENTS

For ease of understanding of this application, a communication system to which this application is applicable and a device in this application are first described.

The technical solutions shown in this application may be used in a 5th generation mobile communication technology (The 5th generation mobile communication technology, 5G for short) system, and the 5G system may also be referred to as a 5th generation mobile communication technology new radio (New Radio, NR) system. The technical solutions shown in this application may also be used in a long term evolution (long term evolution, LTE) system, and may further be used in a universal mobile telecommunications system (universal mobile telecommunications system, UMTS) terrestrial radio access network (UMTS terrestrial radio access network, UTRAN) system, or a global system for mobile communications (global system for mobile communication, GSM)/enhanced data rates for GSM evolution (enhanced data rate for GSM evolution, EDGE) system radio access network (GSM EDGE radio access network, GERAN) architecture. The technical solutions shown in this application may further be used in another communication system, for example, a public land mobile network (public land mobile network, PLMN) system or a communication system after 5G. This is not limited in this application.

This application relates to a terminal device. The terminal device may be a device that includes a wireless transceiver function and that can cooperate with a network device to provide a communication service for a user. The terminal device may be an industrial robot, an industrial automation device, a terminal device, user equipment (user equipment, UE), an access terminal, a subscriber unit, a subscriber station, a mobile station, a mobile console, a remote station, a remote terminal, a mobile device, a user terminal, a terminal, a wireless terminal device, a user agent, or a user apparatus. For example, the terminal device may be a cellular phone, a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a computing device, another processing device connected to a wireless modem, a vehicle-mounted device, a wearable device, or a terminal device in a 5G network or a network after 5G, for example, a V2X terminal device in an LTE network or a V2X terminal device in a 5G network. This is not limited in this application.

This application also relates to a network device. The network device may be a device configured to communicate with the terminal device. The network device may be a base station gNodeB (gNodeB, gNB) or a next-generation evolved NodeB (next generation-evolved NodeB, ng-eNB) in the 5G system. The gNB provides a user plane function and a control plane function of new radio (new radio, NR) for UE, and the ng-eNB provides a user plane function and a control plane function of evolved universal terrestrial radio access (evolved universal terrestrial radio access, E-UTRA) for UE. It should be noted that, the gNB and the ng-eNB are merely names, are used to indicate base stations that support a 5G network system, and are not intended for limitation. The network device may alternatively be a base transceiver station (base transceiver station, BTS) in a GSM system or a CDMA system, or may be a NodeB (nodeB, NB) in a WCDMA system, or may be an evolved NodeB (evolutional node B, eNB or eNodeB) in the LTE system. Alternatively, the network device may be a relay station, an access point, a vehicle-mounted device, a wearable device, a network side device in a network after 5G, a network device in a future evolved public land mobile network (public land mobile network, PLMN), a road site unit (road site unit, RSU), or the like.

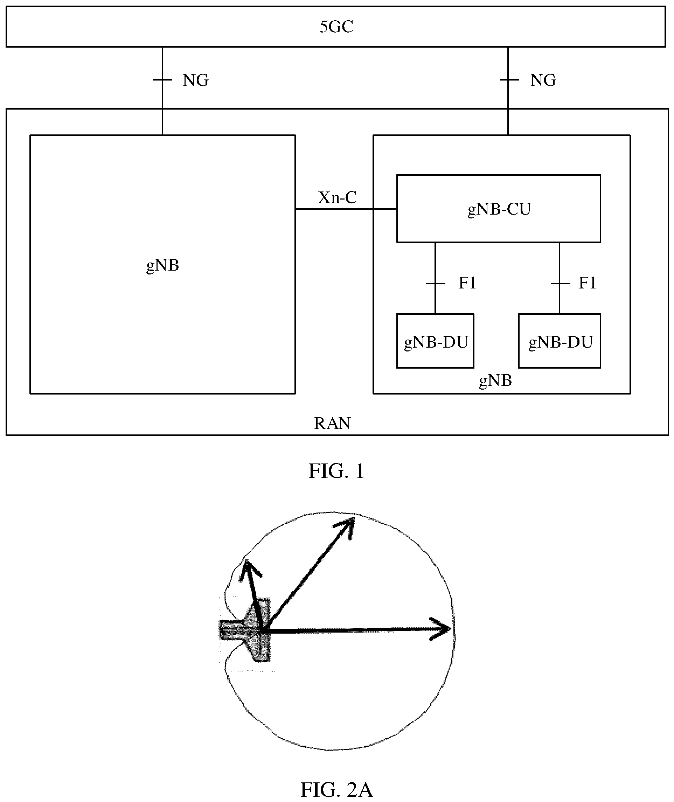

Abase station (gNB or ng-eNB) in the 5G communication system may include a centralized unit (central unit, CU) and a distributed unit (distributed unit, DU). For ease of understanding, the following describes an architecture of a 5G communication system based on a CU-DU split base station with reference to FIG. 1.

FIG. 1 is an architectural diagram of a 5G communication system based on a CU-DU split base station according to an embodiment of this application. Refer to FIG. 1. A next-generation core (next generation core, 5GC) and a radio access network (radio access network, RAN) node connected to the 5GC are included. The RAN node may communicate with the 5GC through an NG (next generation) interface. The RAN node may be a gNB or an ng-eNB. For ease of description, FIG. 1 shows only two gNBs, and one of the gNBs is in a CU-DU architecture.

Optionally, a gNB and a gNB (or a gNB and a gNB-C) may communicate with each other through an Xn-C interface. One gNB may include one CU and one or more DUs. For example, one gNB shown in FIG. 1 includes one CU and two DUs. The CU and the DU may communicate with each other through an F1 interface.

Optionally, the CU-DU split base station may alternatively be a base station in an LTE system. Correspondingly, the CU and the DU may communicate with each other through a V1 interface or a W1 interface.

In an actual application process, to enable a terminal device to obtain a relatively good network service, coverage of a network device may be adjusted.

For ease of understanding, network coverage in an NR system is described below.

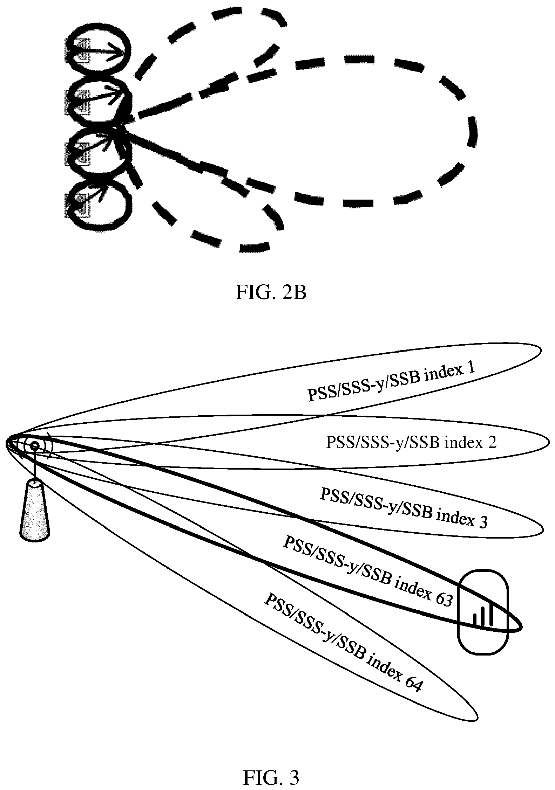

An antenna is disposed in a network device (for example, a gNB or an ng-eNB), and the network device may receive and send data through the antenna. The antenna includes one or more elements. A radiation direction of each element is shown in FIG. 2A, and radiation directions of a plurality of elements are shown in FIG. 2B.

FIG. 2A is a schematic diagram of a radiation direction of an element according to an embodiment of this application. FIG. 2B is another schematic diagram of a radiation direction of an element according to an embodiment of this application. Refer to FIG. 2A. The element has different radiation intensities in different directions. Refer to FIG. 2B. When the plurality of elements are placed together, a radiation intensity in one direction is a superposition of radiation intensities of the plurality of elements in the direction.

In the NR system, one network device (for example, a gNB or an ng-eNB) may correspond to one or more cells, one cell corresponds to one or more SSBs, one SSB corresponds to one physical cell identifier (physical cell identity, PCI), and one SSB corresponds to one frequency. In a possible implementation, a plurality of SSBs may be transmitted within a frequency range of a carrier, and PCIs of SSBs transmitted at different frequency domain positions may not be unique. For example, different SSBs in frequency domain may have different PCIs. When an SSB is associated with stored minimum system information (remaining minimum system information, RMSI), the SSB may correspond to one independent cell, and has a unique NR cell global identifier (NR cell global identifier, NCGI). An SSB with a unique NCGI may be referred to as a CD-SSB (cell defining-SSB, cell defining-SSB), and another SSB may be referred to as a non CD-SSB. In a CD-SSB cell, a network device periodically broadcasts an SSB. The SSB includes a primary synchronization signal (primary synchronization signal, PSS) and a secondary synchronization signal (secondary synchronization signal, SSS), and a terminal device synchronizes with the CD-SSB cell and accesses a network by using the cell. In addition, the terminal device may measure SSB cells corresponding to a plurality of frequencies of one network device, including a CD-SSB cell and a non CD-SSB cell.

In an SSB cell corresponding to one frequency, a plurality of beams and a synchronization signal (synchronization signal, SS) burst set period (SS burst set period) are included for beam transmission. The beams include an SS/physical broadcast channel (Physical broadcast channel, PBCH)-based beam and a channel state information reference signal (channel state information reference signal, CSI-RS)-based beam. An identifier of the beam may be represented by an SSB index (SSB index) or a CSI-RS index (CSI-RS index). Abeam is described below with reference to FIG. 3.

FIG. 3 is a schematic diagram of a beam according to an embodiment of this application. Refer to FIG. 3. A PSS/SSS-y is used to indicate one cell. For example, the PSS/SSS-y may constitute one PCI. The SSB index (SSB index) is an index of a beam (which may also be referred to as an identifier of a beam). It can be learned from FIG. 3 that the cell indicated by the PSS/SSS-y may be covered by beams with an SSB index 1 to an SSB index 64.

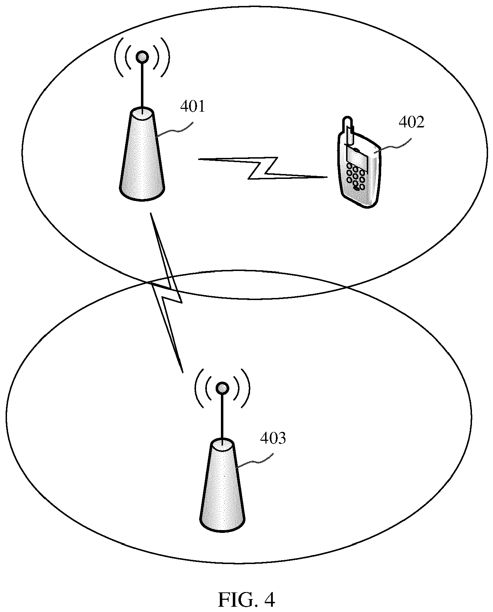

FIG. 4 is an architectural diagram of a communication system according to an embodiment of this application. Refer to FIG. 4. The communication system includes a network device 401, a network device 402, and a terminal device 403. The terminal device 403 is located in a cell covered by the network device 401, and the network device 401 may communicate with the terminal device 403. The network device 401 and the network device 402 are adjacent devices, the network device 401 and the network device 402 may communicate with each other, and the adjacent devices may be preconfigured.

In this application, the terminal device 403 may measure a cell served by the network device 401, and send measurement information to the network device 401. The network device 401 may adjust cell coverage and/or beam coverage of the network device 401 based on the measurement information sent by the terminal device 403. The network device 402 may further send coverage indication information to the network device 401, where the coverage indication information is used to indicate a coverage status of the network device 402. The network device 401 may adjust cell coverage and/or beam coverage of the network device 401 based on the coverage indication information sent by the network device 402. In the foregoing process, the network device 401 may perform the cell coverage adjustment and/or the beam coverage adjustment, so that coverage adjustment of the network device 401 is more accurate, and accuracy of network coverage adjustment is improved.

The following describes the technical solutions of this application in detail with reference to specific embodiments. It should be noted that the following several embodiments may exist independently or may be combined with each other, and same or similar content is not repeatedly described in different embodiments.

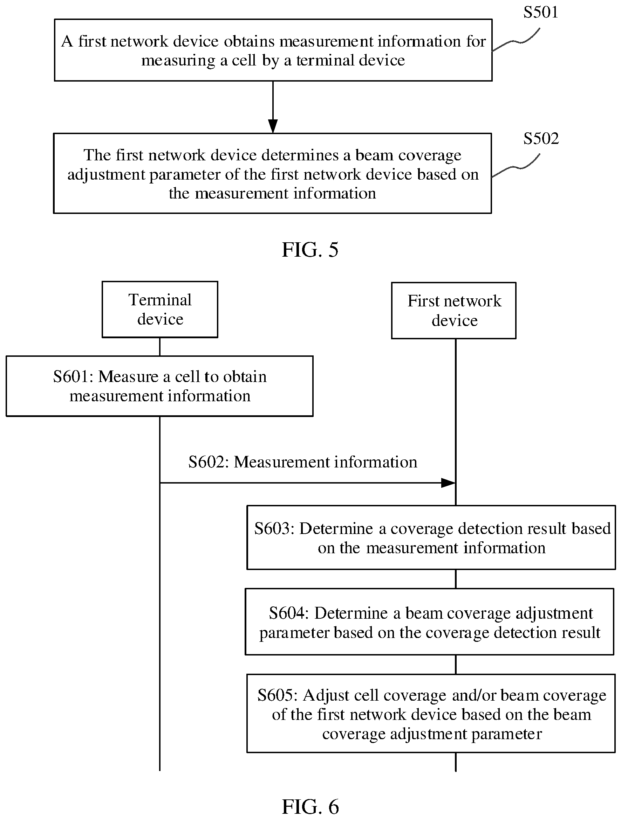

FIG. 5 is a schematic flowchart of a coverage adjustment method according to an embodiment of this application. Refer to FIG. 5. The method may include the following steps.

S501: A first network device obtains measurement information for measuring a cell by a terminal device.

The measurement information includes channel state information (channel state information, CSI), radio resource management (radio resource management, RRM) information, and location information of the terminal device.

Optionally, the terminal device is currently located within coverage of the first network device. That is, the terminal device currently camps on a cell served by the first network device.

Optionally, the cell measured by the terminal device may include a serving cell of the terminal device and/or a neighboring cell.

The serving cell is a cell that is served by the first network device and on which the terminal device currently camps.

The neighboring cell is a cell adjacent to the serving cell, and the neighboring cell may include a cell that is served by the first network device and that is adjacent to the serving cell, and/or a cell that is served by another network device and that is adjacent to the serving cell.

The cells in this embodiment of this application may be cells corresponding to different frequencies.

Optionally, there may be one or more terminal devices. In other words, the first network device may obtain measurement information for measuring a cell by one or more terminal devices, and the one or more terminal devices are terminal devices within coverage of the first network device.

Optionally, the first network device may obtain measurement information for measuring a cell by the terminal device in one time period. The time period may be a time period of preset duration before a current moment. For example, the time period may be one hour or one day before the current moment.

There is an association relationship between the CSI, the RRM, and the location information in the measurement information obtained by the first network device, and the CSI and the RRM in the measurement information is obtained by the terminal device through measurement at a location corresponding to the location information. In this way, after obtaining the CSI and the RRM, the first network device may determine, based on the corresponding location information, a coverage status at the location within the coverage of the first network device.

Optionally, the location information may be an absolute location, or may be a relative location. When the location information is the absolute location, the location information may further be represented by a longitude and a latitude.

For example, assuming that the measurement information includes CSI 1, RRM 1, and location information 1, the location information 1 is location information of the terminal device when the terminal device measures the CSI 1 and the RRM 1 of the cell.

For example, the terminal device may report, to the first network device, measurement information obtained through measurement at different locations. For example, the terminal device may measure a cell at a first location, and send, to the first network device, measurement information obtained through measurement at the first location (where the measurement information includes location information of the first location). The terminal device may further measure the cell at a second location, and send, to the first network device, measurement information obtained through measurement at the second location (where the measurement information includes location information of the second location). By analogy, the terminal device may report, to the first network device, the measurement information obtained through measurement at the different locations, and the measurement information includes corresponding location information.

Optionally, the CSI includes at least one of the following information: a precoding matrix indicator (precoding matrix indication, PMI), a rank indicator, and a channel quality indicator (channel quality indicator, CQI).

The precoding is an adaptive technology in a multiple-antenna system. That is, a precoding matrix is adaptively changed at a transmit end based on CSI of a channel, to change a channel through which a signal passes. Specifically, both a receive end and a transmit end store a set of codebook including a plurality of precoding matrices. The receive end may select one precoding matrix from the codebook according to an estimated channel matrix and a preset criterion, and feed back an index value of the selected precoding matrix and quantized channel state information to the transmit end. At a next moment, the transmit end uses a new precoding matrix, and determines a coding and modulation scheme for a codeword based on the quantized channel state information fed back.

The rank is a rank in an antenna matrix in a multiple input multiple output (multiple input multiple output, MIMO) solution, and represents a plurality of parallel and effective data streams. The rank indicator is used to indicate a rank.

The CQI is an index value corresponding to channel quality when preset performance is met. The CQI may include information such as a current modulation scheme, a coding rate and efficiency. A larger CQI index indicates higher coding efficiency. For example, the preset performance may be a block error rate (block error rate, BLER) of 10%.

Optionally, the RRM information may include at least one of the following information: an identifier of the cell, a measurement result of the cell, a timing advance (time advance, TA), or power headroom (power headroom, PHR).

The cell involved in the RRM information may include the serving cell of the terminal device and/or the neighboring cell. For example, if the terminal device measures the serving cell, the RRM information includes at least one of the following information: an identifier of the serving cell, a measurement result of the serving cell, a TA obtained by measuring the serving cell, or PHR obtained by measuring the serving cell. For example, if the terminal device measures the neighboring cell, the RRM information includes at least one of the following information: an identifier of the neighboring cell, a measurement result of the neighboring cell, a TA obtained by measuring the neighboring cell, or PHR obtained by measuring the neighboring cell.

The identifier of the cell may include a physical cell identifier (physical cell identifier, PCI) and/or a cell global identity (cell global identifier, CGI).

The measurement result of the cell includes a measurement result of a cell granularity and/or a measurement result of a beam granularity, and the measurement result of the cell granularity and the measurement result of the beam granularity include at least one of the following information: signal strength or signal quality.

Optionally, the measurement result of the cell granularity includes a synchronization signal (Synchronization Signal, SS)/physical broadcast channel (Physical broadcast channel, PBCH)-based measurement result and/or a channel state information reference signal (channel state information reference signal, CSI-RS)-based measurement result. The measurement result includes the signal strength and/or the signal quality, and the signal strength may include reference signal received power (reference signal received power, RSRP). The signal quality may include reference signal received quality (reference signal receiving quality, RSRQ) and/or a signal to interference plus noise ratio (signal to interference plus noise ratio, SINR).

Optionally, the measurement result of the beam granularity includes an SS/PBCH-based measurement result and/or a CSI-RS-based measurement result, and the measurement result includes an identifier of the beam and signal strength and/or signal quality of the beam. The identifier of the beam may be an SSB index (SSB index) or a CSI-RS index (CSI-RS index). The signal strength may include RSRP. The signal quality may include RSRQ and/or an SINR.

Optionally, the measurement information may further include a measurement moment. The measurement moment refers to a moment at which the cell is measured. In this way, the first network device may determine coverage statuses of the first network device at different moments based on the measurement information.

Optionally, the measurement moment may be an absolute time, or may be a relative time.

For example, the terminal device may measure the cell at different moments, to obtain measurement information obtained through measurement at different moments.

S502: The first network device determines a beam coverage adjustment parameter of the first network device based on the measurement information.

Optionally, the beam coverage adjustment parameter may include a coverage adjustment parameter of the cell and/or a coverage adjustment parameter of the beam.

Optionally, the coverage adjustment parameter of the cell and the coverage adjustment parameter of the beam each include at least one of the following parameters: a state of an antenna element, a phase difference of an antenna, or a precoding matrix of an antenna; and the state of the antenna element includes an active state and an inactive state.

Optionally, the precoding matrix of the antenna may be estimated based on the PMI in the CSI.

It should be noted that the beam coverage adjustment parameter may be determined with an objective of obtaining optimal signal strength and optimal signal quality. In other words, the determined beam coverage adjustment parameter may enable optimal signal strength and optimal signal quality of the first network device.

After determining the beam coverage adjustment parameter, the first network device may adjust cell coverage and/or beam coverage of the first network device based on the beam coverage adjustment parameter.

It should be noted that after obtaining the measurement information, the first network device may further send the measurement information to a centralized management node, and the centralized management node adjusts the cell coverage and/or the beam coverage of the first network device based on the measurement information. For example, the centralized management node may first determine the beam coverage adjustment parameter of the first network device based on the measurement information, and then adjust the cell coverage and/or the beam coverage of the first network device based on the beam coverage adjustment parameter. For example, the centralized management node may be a network management maintenance (operation, administration and maintenance, OAM) entity.

According to the coverage adjustment method provided in the embodiments of this application, the first network device may obtain the measurement information for measuring the cell by the terminal device, determine the beam coverage adjustment parameter of the first network device based on the measurement information, and adjust the cell coverage and/or the beam coverage of the first network device based on the beam coverage adjustment parameter. The measurement information includes the CSI, the RRM information, and the location information of the terminal device. In this way, after obtaining the measurement information, the first network device may determine the coverage status at each location within the coverage of the first network device based on the measurement information, so that the first network device can accurately adjust the cell coverage and/or the beam coverage of the first network device. Therefore, the accuracy of coverage adjustment is higher, and the accuracy of network coverage adjustment is improved.

Based on the embodiment shown in FIG. 5, the following describes the coverage adjustment method shown in this application by using the embodiment shown in FIG. 6.

FIG. 6 is a schematic flowchart of another coverage adjustment method according to an embodiment of this application. Refer to FIG. 6. The method may include the following steps.

S601: A terminal device measures a cell to obtain measurement information.

Optionally, the terminal device may be any terminal device within coverage of a first network device.

It should be noted that, for the cell and the measurement information shown in S601, refer to related descriptions in S501. Details are not described herein again.

S602: The terminal device sends the measurement information to the first network device.

Optionally, when the terminal device is in an idle state or in an inactive state, the terminal device may record the measurement information in a log manner and send the measurement information to the first network device. For example, the measurement information may be recorded by using minimization of drive tests (minimization of drive-tests, MDT), and the measurement information is sent to the first network device when the terminal device changes from the idle state or the inactive state to a connected state.

Optionally, the terminal device may perform MDT measurement in a specific area, and the specific area may be configured by the first network device for the terminal device.

Optionally, when the network device is in a connected state, the terminal device may send the measurement information to the first network device by using a radio resource control (Radio Resource Control, RRC) message.

S603: The first network device determines a coverage detection result based on the measurement information.

Optionally, the first network device may determine the coverage detection result based on RRM information and location information.

Optionally, the coverage detection result includes at least one of the following: weak coverage, overshoot coverage, or imbalance between uplink and downlink transmission.

The weak coverage indicates that there is no wireless network coverage or coverage signal quality is excessively poor in an area. The area with weak coverage is referred to as a weak coverage area. The weak coverage includes inter-cell weak coverage and intra-cell weak coverage. A downlink signal in the weak coverage area is unstable. Consequently, communication quality of a terminal device in the weak coverage area is poor. For example, a call drop fault is prone to occur on the terminal device in the weak coverage area.

Optionally, whether an area in which the terminal device is currently located is a weak coverage area may be determined based on signal strength and/or signal quality detected by the terminal device. That is, whether a data point on which the terminal device is currently located is a weak coverage data point is determined based on the signal strength and/or the signal quality detected by the terminal device. For example, when either the signal strength or the signal quality detected by the terminal device does not meet a corresponding condition, it is determined that a current location of the terminal device is in weak coverage. The signal strength and/or the signal quality may be of a cell granularity, or may be of a beam granularity. The signal strength may include RSRP, and the signal quality may include RSRQ and an SINR.

For example, when the terminal device is located in the center (a non-edge area) of a cell, it may be determined, based on signal strength and/or signal quality of the cell detected by the terminal device, whether an area in which the terminal device is currently located is a weak coverage area. When the terminal device detects that the signal strength of the cell does not meet a condition 1, and/or detects that the signal quality of the cell does not meet a condition 2, it is determined that the area in which the terminal device is currently located is a weak coverage area, that is, a data point in which the terminal device is currently located is a weak coverage data point.

For example, when the terminal device is located in an edge area of a cell, it may be determined, based on signal strength and/or signal quality of the cell detected by the terminal device and signal strength and/or signal quality that is of a neighboring cell of the cell and that is detected by the terminal device, whether an area in which the terminal device is currently located is a weak coverage area. When one of the following four conditions is met, it is determined that the area in which the terminal device is currently located is a weak coverage area, that is, the data point in which the terminal device is currently located is a weak coverage data point. The four conditions are respectively: the terminal device detects that signal strength of the cell does not meet a condition 1; the terminal device detects that signal quality of the cell does not meet a condition 2; the terminal device detects that signal strength of a neighboring cell of the cell does not meet a condition 3; the terminal device detects that signal quality of a neighboring cell of the cell does not meet a condition 4.

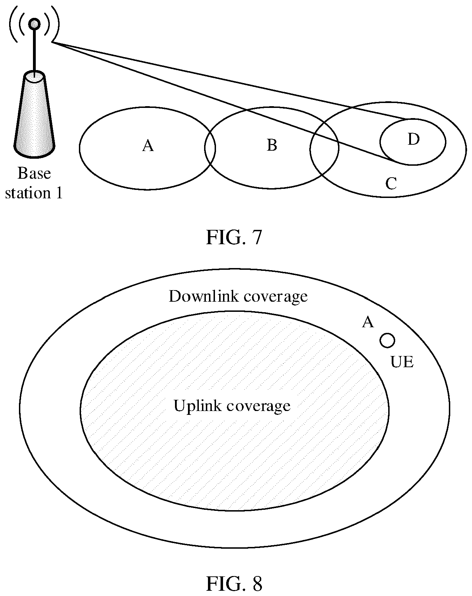

The overshoot coverage indicates that coverage of a network device exceeds a planned range and discontinuous dominant coverage is formed in coverage of another network device. The following describes the overshoot coverage with reference to FIG. 7.

FIG. 7 is a schematic diagram of overshoot coverage according to an embodiment of this application. Refer to FIG. 7. A cell D is in coverage of a base station 1, and a cell A, a cell B, and a cell C are cells served by other base stations except the base station 1. Because coverage corresponding to the cell D served by the base station 1 exceeds a planned range of the base station 1, and the cell D forms coverage for the cell C served by another base station, the cell D has overshoot coverage. In this case, when the terminal device is located in the cell D, because no neighboring cell is configured around the cell D, when the terminal device moves from the cell D to the cell C, a call drop occurs on the terminal device. In addition, even if a neighboring cell is configured for the cell D, because an area of the cell D is relatively small, a call drop is also prone to occur due to a delayed handover of the terminal device.

Optionally, whether a current location of the terminal device is in the overshoot coverage may be determined based on a TA obtained by the terminal device through measurement. For example, when the TA obtained by the terminal device through measurement is greater than a preset TA threshold, it is determined that the current location of the terminal device is in the overshoot coverage.

The imbalance between uplink and downlink transmission indicates that for uplink and downlink symmetric services in coverage, uplink coverage quality is inconsistent with downlink coverage quality. The uplink and downlink symmetric services refer to services that have the same requirements for uplink coverage and downlink coverage. The uplink coverage quality is inconsistent with the downlink coverage quality in the following scenarios: good downlink coverage with limited uplink coverage, and good uplink coverage with limited downlink coverage. When the downlink coverage is good and the uplink coverage is limited, it indicates that maximum transmit power of the terminal device still cannot meet an uplink BLER requirement. When the uplink coverage is good and the downlink coverage is limited, it indicates that maximum transmit power of a dedicated downlink signal still cannot meet a downlink BLER requirement. The following describes the imbalance between uplink and downlink transmission with reference to FIG. 8.

FIG. 8 is a schematic diagram of imbalance between uplink and downlink transmission according to an embodiment of this application. Refer to FIG. 8. Downlink coverage is relatively large and uplink coverage is relatively small, that is, downlink coverage is good and uplink coverage is limited. For example, when a terminal device is located in an area A, the terminal device may receive a good downlink signal, but the terminal device cannot properly transmit an uplink signal.

Optionally, whether the imbalance between uplink and downlink transmission occurs in an area in which the terminal device is located may be determined based on PHR measured by the terminal device and expected receive power of a network device. For example, when the PHR measured by the terminal device reaches the maximum, but the expected receive power of the network device is still less than preset power, it is determined that the imbalance between uplink and downlink transmission occurs in the area in which the terminal device is located.

Optionally, for a cell with an uplink-downlink imbalance, a first network device to which the cell belongs may configure a cell reselection parameter for UE in the cell, to avoid an access failure caused by the uplink-downlink imbalance, where the cell reselection parameter may include a parameter oriented to a specific cell (for example, an offset Qoffset of a target cell in the R criterion). In other words, the first network device modifies the Qoffset of the specific cell, and sends the Qoffset to the UE served by the first network device. For example, the Qoffset may be of a cell granularity, or may be of a beam granularity. That is, the cell reselection parameter sent by the first network device to the UE may include at least one of an identifier of a cell, an identifier of a beam, a frequency identifier, a Qoffset corresponding to a cell, or a Qoffset corresponding to a beam.

S604: The first network device determines a beam coverage adjustment parameter based on the coverage detection result.

Optionally, the first network device may determine the beam coverage adjustment parameter based on the coverage detection result and measurement information.

For example, the first network device may determine the beam coverage adjustment parameter based on the coverage detection result and CSI and/or RRM in the measurement information.

It should be noted that, for the beam coverage adjustment parameter in S604, refer to the description about the beam coverage adjustment parameter in S502, and details are not described herein again.

S605: The first network device adjusts cell coverage and/or beam coverage of the first network device based on the beam coverage adjustment parameter.

Optionally, the first network device may adjust a state of an antenna element based on the state of the antenna element, adjust a phase difference of an antenna based on the phase difference of the antenna, or adjust a precoding matrix of an antenna based on the precoding matrix, to implement adjustment of the cell coverage and/or the beam coverage of the first network device.

Optionally, in the embodiment shown in FIG. 6, after receiving the measurement information, the first network device may send the measurement information to a centralized management node, and the centralized management node adjusts the cell coverage and/or the beam coverage of the first network device based on the measurement information. For example, the centralized management node may first determine the coverage detection result based on the measurement information, determine the beam coverage adjustment parameter based on the coverage detection result, and adjust the cell coverage and/or the beam coverage of the first network device based on the beam coverage adjustment parameter. Alternatively, after determining that the coverage detection result is obtained, the first network device may send the coverage detection result to the centralized management node, and the centralized management node adjusts the cell coverage and/or the beam coverage of the first network device based on the coverage detection result. For example, the centralized management node may determine the beam coverage adjustment parameter based on the coverage detection result, and adjust the cell coverage and/or the beam coverage of the first network device based on the beam coverage adjustment parameter. For example, the centralized management node may be an OAM entity.

In the embodiment shown in FIG. 6, after obtaining the measurement information for measuring the cell by the terminal device, the first network device may determine a coverage status at each location within coverage of the first network device based on the measurement information, so that the first network device can accurately determine to obtain the coverage detection result based on the coverage status at each location within the coverage of the first network device, and accurately adjust the cell coverage and/or the beam coverage of the first network device based on the coverage detection result. Therefore, accuracy of coverage adjustment is higher, and accuracy of network coverage adjustment is improved.

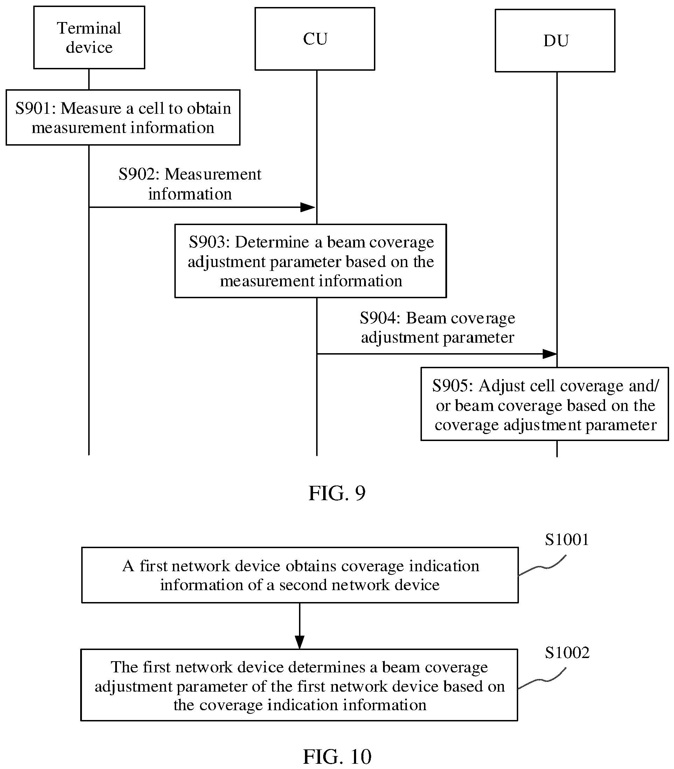

Based on any one of the foregoing embodiments, optionally, the first network device may be a CU. Correspondingly, the foregoing coverage adjustment method may be implemented by using an embodiment shown in FIG. 9.

FIG. 9 is a schematic flowchart of still another coverage adjustment method according to an embodiment of this application. Refer to FIG. 9. The method may include the following steps.

S901: A terminal device measures a cell to obtain measurement information.

It should be noted that, for a process of performing S901, refer to the process of performing S601. Details are not described herein again.

S902: The terminal device sends the measurement information to a CU.

Optionally, the terminal device may send the measurement information to the CU through a DU, that is, the terminal device first sends the measurement information to the DU, and then the DU sends the measurement information to the CU. For example, the terminal device may send the measurement information to the DU by using a medium access control (Medium Access Control, MAC) message, and then the DU sends the measurement information to the CU by using an existing F1 interface message, or sends the measurement information to the CU by using a newly defined F1 interface message.

Optionally, the terminal device may directly send the measurement information to the CU. For example, the terminal device sends the measurement information to the CU by using an RRC message. It should be noted that when sending the RRC message to the CU, the terminal device may forward the RRC message through the DU.

S903: The CU determines a beam coverage adjustment parameter based on the measurement information.

Optionally, the CU may first determine a coverage detection result based on the measurement information, and then determine the beam coverage adjustment parameter based on the coverage detection result.

It should be noted that, for a process in which the CU determines the coverage detection result, refer to a process of performing S603, and for a process in which the CU determines the beam coverage adjustment parameter based on the coverage detection result, refer to a process of performing S604. Details are not described herein again.

S904: The CU sends the beam coverage adjustment parameter to the DU.

Optionally, the CU may send the beam coverage adjustment parameter to the DU through an F1 interface.

S905: The DU adjusts cell coverage and/or beam coverage based on the coverage adjustment parameter.

It should be noted that, for a process of performing S905, refer to the process of performing S605. Details are not described herein again.

Optionally, in the embodiment shown in FIG. 9, after receiving the measurement information, the CU may send the measurement information to a centralized management node, and the centralized management node adjusts the cell coverage and/or the beam coverage based on the measurement information. For example, the centralized management node may first determine the coverage detection result based on the measurement information, determine the beam coverage adjustment parameter based on the coverage detection result, and adjust the cell coverage and/or the beam coverage based on the beam coverage adjustment parameter. Alternatively, after determining that the coverage detection result is obtained, the CU may send the coverage detection result and the measurement information to the centralized management node, and the centralized management node adjusts the cell coverage and/or the beam coverage based on the coverage detection result and the measurement information. For example, the centralized management node may determine the beam coverage adjustment parameter based on the coverage detection result and the measurement information, and adjust the cell coverage and/or the beam coverage based on the beam coverage adjustment parameter. Alternatively, the CU may send the measurement information to the DU, and after receiving the measurement information, the DU sends the measurement information to the centralized management node, and the centralized management node adjusts the cell coverage and/or the beam coverage based on the measurement information. Alternatively, after receiving the measurement information and determining the coverage detection result, the DU sends the coverage detection result and the measurement information to the centralized management node, and the centralized management node adjusts the cell coverage and/or the beam coverage based on the coverage detection result and the measurement information. For example, the centralized management node may be an OAM entity.

In the embodiment shown in FIG. 9, after obtaining the measurement information for measuring the cell by the terminal device, the CU may determine a coverage status at each location within coverage of the DU based on the measurement information, so that the CU can accurately determine to obtain the coverage detection result based on the coverage status at each location within the coverage of the DU, and determine the beam coverage adjustment parameter based on the coverage detection result. In this way, the DU can accurately adjust the cell coverage and/or the beam coverage based on the beam coverage adjustment parameter. Therefore, accuracy of coverage adjustment is higher, and accuracy of network coverage adjustment is improved.

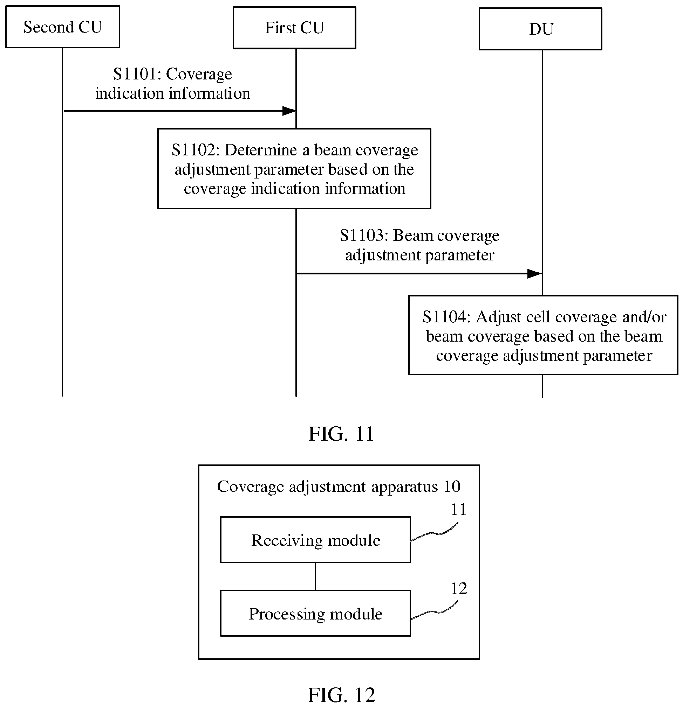

The first network device may further adjust the beam coverage based on coverage indication information of an adjacent network device. For details, refer to the embodiments shown in FIG. 10 and FIG. 11.

FIG. 10 is a schematic flowchart of yet another coverage adjustment method according to an embodiment of this application. Refer to FIG. 10. The method may include the following steps.

S1001: A first network device obtains coverage indication information of a second network device.

Optionally, the first network device and the second network device are adjacent network devices. The adjacent network device may be preconfigured.

It should be noted that the first network device may obtain the coverage indication information of the second network device by using an Xn interface message. For example, the Xn interface message is a base station configuration update message.

In a possible case, the coverage indication information may include an identifier of a cell corresponding to the second network device, frequency (freq) information of the cell corresponding to the second network device, and a cell status corresponding to the second network device. Optionally, the identifier of the cell may include a PCI and/or a CGI.

Optionally, the frequency information may be a frequency number, a frequency index, or the like. For example, the frequency information may be an absolute radio frequency channel number (absolute radio frequency channel number, ARFCN). It should be noted that when identifiers of cells corresponding to different frequency information are different, the identifier of the cell corresponding to the second network device may be determined based on the frequency information. Correspondingly, the coverage indication information may further not include the identifier of the cell corresponding to the second network device.

Optionally, the cell status includes one or more of a cell coverage state (cell coverage state), a cell deployment status indicator (cell deployment status indicator), and cell replacing information (cell replacing info). The cell coverage state may be represented by 0 or 1. For example, 0 indicates that the cell is deactivated, and 1 indicates that the cell is activated. Optionally, the cell coverage state further includes a cell coverage configuration, and the cell coverage configuration may include antenna information. The antenna information includes at least one of the following information: a state of an antenna element, a phase difference of an antenna, or a precoding matrix of an antenna; and the state of the antenna element includes an active state and an inactive state. The cell deployment status indicator is used to indicate whether the cell coverage state can be reused in a next configuration. The cell replacing information is used to indicate that the cell can be used as a handover target.

Optionally, the cell status may further include at least one of the following information: CSI or RRM information. The CSI and the RRM included in the cell status are reported by a terminal device of the second network device to the second network device. That is, the CSI and the RRM in the cell status are obtained by the terminal device in coverage of the second network device by measuring a cell served by the second network device.

The CSI in the cell status includes at least one of the following information: a PMI, a rank indicator, or a CQI. Content included in the CSI in the cell status is similar to content included in the CSI in the measurement information, and details are not described herein again.

The RRM information in the cell status may include at least one of the following information: an identifier of the cell, a measurement result of the cell, a TA, or PHR. Content included in the RRM in the cell status is similar to content included in the RRM in the measurement information, and details are not described herein again.

Optionally, the coverage indication information may be in the base station configuration update message.

For example, content included in the coverage indication information may be shown in Table 1.

**Table 1**

| | |
|---|---|
| Information element (information element, IE)/Group | Semantics description |
| name (Group Name) | (Semantics description) |
| Coverage modification list | List of cells with modified coverage |
| (Coverage Modification List) | (List of cells with modified coverage) |
| ECGI/PCI | Cell global identifier and/or cell physical identifier |
| Frequency (frequency) | Cell frequency information, for example, an ARFCN |
| Cell coverage state | The value can be an integer. Different values indicate coverage configurations of different cells. |
| (Cell Coverage State) | |
| Cell deployment status indicator | Indicates whether the cell coverage state can be reused in a next configuration. |
| (cell deployment status indicator) | |
| Information element (information element, IE)/Group name (Group Name) | Semantics description |
| | (Semantics description) |
| Cell replacing information | Indicates that the cell can be used as a handover target. |
| (cell replacing info) | |

It should be noted that Table 1 is merely used as an example to describe content included in the coverage indication information, but does not limit the coverage indication information.

In another possible case, the coverage indication information includes an identifier of a beam corresponding to the second network device and a beam status corresponding to the second network device. Optionally, the beam status includes one or more of a beam coverage state (beam coverage state), a beam deployment status indicator (beam deployment status indicator), and beam replacing information (beam replacing info). The beam coverage state may be represented by 0 or 1. For example, 0 indicates that the beam is deactivated, and 1 indicates that the beam is activated. Optionally, the beam coverage state further includes a beam coverage configuration, and the beam coverage configuration may include antenna information. The antenna information includes at least one of the following information: a state of an antenna element, a phase difference of an antenna, or a precoding matrix of an antenna; and the state of the antenna element includes an active state and an inactive state. The beam deployment status indicator is used to indicate whether the beam coverage state can be reused in a next configuration. The beam replacing information is used to indicate that the beam can be used as a handover target.

Optionally, the beam status may further include at least one of the following information: CSI or RRM information. The CSI and the RRM included in the beam status are reported by a terminal device of the second network device to the second network device. That is, the CSI and the RRM in the beam status are obtained by the terminal device in coverage of the second network device by measuring a beam of the second network device.

The CSI in the beam status includes at least one of the following information: a PMI, a rank indicator, or a CQI. Content included in the CSI in the beam status is similar to content included in the CSI in the measurement information, and details are not described herein again.

The RRM information in the beam status may include at least one of the following information: an identifier of the beam, a measurement result of the beam, a TA, or PHR. Content included in the RRM in the beam status is similar to content included in the RRM in the measurement information, and details are not described herein again.

Optionally, the coverage indication information is included in the base station configuration update message.

For example, content included in the coverage indication information may be shown in Table 2.

**Table 2**

| | |
|---|---|
| Information element/Group name | Semantics description |
| (IE/Group Name) | (Semantics description) |
| Coverage modification list | List of cells with modified coverage |
| (Coverage Modification List) | (List of cells with modified coverage) |
| E-UTRAN cell global identifier (E-UTRAN Cell Global Identifier, ECGI)/PCI | Cell global identifier or cell physical identifier |
| Frequency (frequency) | Cell frequency information, for example, an ARFCN |
| Beam ID (beam ID) | SSB index or CSI-RS index |
| Beam coverage state | The value can be an integer. Different values indicate coverage configurations of different beams. |
| (beam Coverage State) | |
| Beam deployment status indicator | Indicates whether the beam coverage state can be reused in a next configuration. |
| (beam deployment status indicator) | |
| Beam replacing information | Indicates that the beam can be used as a handover target. |
| (beam replacing info) | |

It should be noted that Table 2 is merely used as an example to describe content included in the coverage indication information, but does not limit the coverage indication information.

In this possible case, the coverage indication information may further include at least one of an identifier of a cell corresponding to the second network device and frequency information of the cell corresponding to the second network device.

In any one of the foregoing possible cases, optionally, the coverage indication information may further include a coverage adjustment suggestion of the second network device. The coverage adjustment suggestion may include one or more of an adjustment suggestion for the antenna element, an adjustment suggestion for the phase difference of the antenna, or an adjustment suggestion for the precoding matrix of the antenna.

For example, it is assumed that a base station 1 and a base station 2 are adjacent base stations, and the base station 2 has sent antenna information of the base station 2 to the base station 1. When the base station 1 wants to reduce coverage of the base station 1 or the base station 1 finds that an edge area of coverage of the base station 1 is in weak coverage, the base station 1 may send the coverage indication information to the base station 2, and include a coverage adjustment suggestion in the coverage indication information, where the coverage adjustment suggestion is used to indicate the base station 2 to activate more elements, so that the base station 2 adjusts cell coverage and/or beam coverage based on the coverage adjustment suggestion.

Optionally, the second network device first obtains the coverage indication information, and then sends the coverage indication information to the first network device. For example, the second network device may send the coverage indication information to the first network device through an X2/Xn interface. The X2/Xn interface may be an existing interface, or may be a newly defined interface.

S 1002: The first network device determines a beam coverage adjustment parameter of the first network device based on the coverage indication information.

Optionally, the beam coverage adjustment parameter may include a coverage adjustment parameter of the cell and/or a coverage adjustment parameter of the beam.

Optionally, the beam coverage adjustment parameter includes at least one of the following parameters: a state of an antenna element, a phase difference of an antenna, or a precoding matrix of an antenna; and the state of the antenna element includes an active state and an inactive state.

Optionally, the precoding matrix of the antenna may be estimated based on the PMI in the CSI.

Optionally, a parameter included in the beam coverage adjustment parameter is an adjusted parameter.

After determining the beam coverage adjustment parameter, the first network device may adjust cell coverage and/or beam coverage of the first network device based on the beam coverage adjustment parameter. For example, the first network device may adjust a state of an antenna element based on the state of the antenna element, adjust a phase difference of an antenna based on the phase difference of the antenna, or adjust a precoding matrix of an antenna based on the precoding matrix, to implement adjustment of the beam coverage of the first network device.

It should be noted that after obtaining the measurement information, the first network device may further send the measurement information to a centralized management node, and the centralized management node adjusts the cell coverage and/or the beam coverage of the first network device based on the measurement information. For example, the centralized management node may first determine the beam coverage adjustment parameter of the first network device based on the measurement information, and then adjust the cell coverage and/or the beam coverage of the first network device based on the beam coverage adjustment parameter.

In the embodiment shown in FIG. 10, the first network device may obtain the coverage indication information of the second network device, and adjust the cell coverage and/or the beam coverage of the first network device based on the coverage indication information of the second network device. The first network device may obtain a coverage status of the second network device based on the coverage indication information of the second network device, and then accurately adjust coverage of the first network device based on the coverage status of the second network device. Therefore, accuracy of coverage adjustment is higher, and accuracy of network coverage adjustment is improved.

Based on the embodiment shown in FIG. 10, optionally, either the first network device or the second network device may be a CU. With reference to the embodiment shown in FIG. 11, the following describes the foregoing coverage adjustment method by using an example in which the first network device may be a first CU and the second network device may be a second CU.

FIG. 11 is a schematic flowchart of another coverage adjustment method according to an embodiment of this application. Refer to FIG. 11. The method may include the following steps.

S1101: The second CU sends coverage indication information to the first CU.

It should be noted that, for a process of performing S1101, refer to the process of performing S1001. Details are not described herein again.

S1102: The first CU determines a beam coverage adjustment parameter based on the coverage indication information.

It should be noted that, for a process of performing S1102, refer to the process of performing S1002. Details are not described herein again.

S1103: The first CU sends the beam coverage adjustment parameter to a DU.

The DU is a DU connected to the first CU, that is, the DU is a DU managed by the first CU. The DU and the first CU belong to a same base station.

Optionally, the first CU may send the beam coverage adjustment parameter to the DU through an F1 interface.

S1104: The DU adjusts cell coverage and/or beam coverage based on the beam coverage adjustment parameter.

Optionally, the DU may adjust a state of an antenna element based on the state of the antenna element, adjust a phase difference of an antenna based on the phase difference of the antenna, or adjust a precoding matrix of an antenna based on the precoding matrix, to implement adjustment of the cell coverage and/or the beam coverage.

In the embodiment shown in FIG. 11, the first CU may obtain the coverage indication information of the second CU and determine the beam coverage adjustment parameter based on the coverage indication information of the second CU, and the first CU sends the beam coverage adjustment parameter to the DU connected to the first CU, so that the DU adjusts the cell coverage and/or the beam coverage based on the beam coverage adjustment parameter. The coverage indication information of the second CU indicates a coverage status of the second CU, so that the DU connected to the first CU may accurately adjust the coverage based on the coverage status of the second CU. Because the DU may adjust the beam coverage, accuracy of coverage adjustment is higher, and accuracy of network coverage adjustment is improved.

FIG. 12 is a schematic structural diagram of a coverage adjustment apparatus according to an embodiment of this application. The coverage adjustment apparatus 10 may be used for a first network device. Refer to FIG. 12. The coverage adjustment apparatus 10 may include a receiving module 11 and a processing module 12.

The receiving module 11 is configured to obtain measurement information for measuring a cell by a terminal device, where the measurement information includes channel state information CSI, radio resource management RRM information, and location information of the terminal device.

The processing module 12 is configured to determine a beam coverage adjustment parameter of the first network device based on the measurement information.

Optionally, the receiving module 11 may perform S502 in the embodiment in FIG. 5, S602 in the embodiment in FIG. 6, and S902 in the embodiment in FIG. 9.

Optionally, the processing module 12 may perform S501 in the embodiment in FIG. 5, S603 to S605 in the embodiment in FIG. 6, and S903 in the embodiment in FIG. 9.

It should be noted that the coverage adjustment apparatus provided in this embodiment of this application may perform technical solutions shown in the foregoing method embodiments. Implementation principles and beneficial effects of the coverage adjustment apparatus are similar to those of the technical solutions, and details are not described herein again.

In a possible implementation, the measurement information further includes a measurement moment.

In a possible implementation, the RRM information includes at least one of the following information: an identifier of the cell, a measurement result of the cell, a timing advance TA, or power headroom PHR.

In a possible implementation, the measurement result includes a measurement result of a cell granularity and/or a measurement result of a beam granularity, and the measurement result of the cell granularity and the measurement result of the beam granularity include at least one of the following information: signal strength or signal quality.

In a possible implementation, the processing module 12 is further configured to: after the receiving module 11 obtains the measurement information for measuring the cell by the terminal device, determine a coverage detection result of the cell based on the RRM information and the location information, where the coverage detection result includes at least one of the following: weak coverage, overshoot coverage, or imbalance between uplink and downlink transmission.

In a possible implementation, the cell includes a serving cell of the terminal device and/or a neighboring cell of the serving cell.

In a possible implementation, the receiving module 11 is further configured to obtain coverage indication information of a second network device.

The processing module 12 is further configured to determine the beam coverage adjustment parameter of the first network device based on the coverage indication information.

Optionally, the receiving module 11 may further perform S1001 in the embodiment in FIG. 10 and S1101 in the embodiment in FIG. 11.

Optionally, the processing module 12 may further perform S1002 in the embodiment in FIG. 10 and S1102 in the embodiment in FIG. 11.

In a possible implementation, the coverage indication information includes an identifier of a beam corresponding to the second network device and a beam status corresponding to the second network device.

In a possible implementation, the beam status includes at least one of a beam coverage state, a beam deployment status indicator, or beam replacing information.

In a possible implementation, the coverage indication information includes an identifier of a cell corresponding to the second network device, frequency information of the cell corresponding to the second network device, and a cell status corresponding to the second network device.

In a possible implementation, the cell status includes at least one of a cell coverage state, a cell deployment status indicator, and cell replacing information.

In a possible implementation, the coverage status includes at least one of the following information: CSI, RRM information, or antenna information.

In a possible implementation, the beam coverage adjustment parameter includes at least one of the following parameters: a state of an antenna element, a phase difference of an antenna, or a precoding matrix of an antenna; and the state of the antenna element includes an active state and an inactive state.

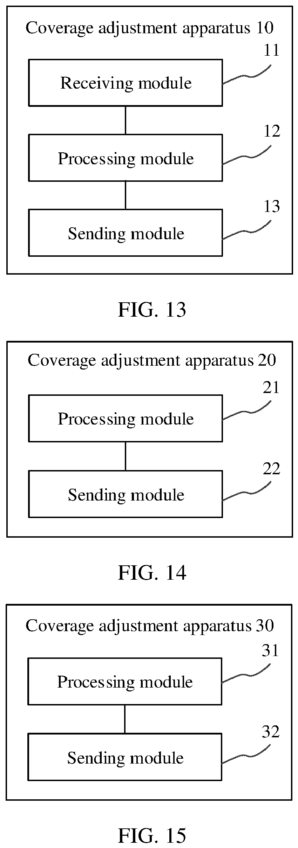

FIG. 13 is a schematic structural diagram of another coverage adjustment apparatus according to an embodiment of this application. On the basis of the embodiment shown in FIG. 12, refer to FIG. 13. The coverage adjustment apparatus 10 may further include a sending module 13.

The sending module 13 is configured to send the beam coverage adjustment parameter to a DU corresponding to the CU, where the first network device is the CU.

It should be noted that the coverage adjustment apparatus provided in this embodiment of this application may perform technical solutions shown in the foregoing method embodiments. Implementation principles and beneficial effects of the coverage adjustment apparatus are similar to those of the technical solutions, and details are not described herein again.

FIG. 14 is a schematic structural diagram of still another coverage adjustment apparatus according to an embodiment of this application. The coverage adjustment apparatus 20 may be used for a terminal device. Refer to FIG. 14. The coverage adjustment apparatus 20 includes a processing module 21 and a sending module 22.

The processing module 21 is configured to obtain measurement information for measuring a cell, where the measurement information includes channel state information CSI, radio resource management RRM information, and location information of the terminal device.

The sending module 22 is configured to send the measurement information to a network device.

Optionally, the processing module 21 may perform S601 in the embodiment in FIG. 6 and S901 in the embodiment in FIG. 9.

Optionally, the sending module may perform S602 in the embodiment in FIG. 6 and S902 in the embodiment in FIG. 9.

It should be noted that the coverage adjustment apparatus provided in this embodiment of this application may perform technical solutions shown in the foregoing method embodiments. Implementation principles and beneficial effects of the coverage adjustment apparatus are similar to those of the technical solutions, and details are not described herein again.

In a possible implementation, the measurement information further includes a measurement moment.

In a possible implementation, the RRM information includes at least one of the following information: an identifier of the cell, a measurement result of the cell, a timing advance TA, or power headroom PHR.

In a possible implementation, the measurement result includes a measurement result of a cell granularity and/or a measurement result of a beam granularity, and the measurement result of the cell granularity and the measurement result of the beam granularity include at least one of the following information: signal strength or signal quality.

In a possible implementation, the CSI includes at least one of the following information: a precoding matrix indicator PMI, indication information indicating a rank in an antenna matrix, and a channel quality indicator CQI.

In a possible implementation, the cell includes a serving cell of the terminal device and/or a neighboring cell of the serving cell.

It should be noted that the coverage adjustment apparatus provided in this embodiment of this application may perform technical solutions shown in the foregoing method embodiments. Implementation principles and beneficial effects of the coverage adjustment apparatus are similar to those of the technical solutions, and details are not described herein again.

FIG. 15 is a schematic structural diagram of another coverage adjustment apparatus according to an embodiment of this application. The coverage adjustment apparatus 30 may be used for a second network device. Refer to FIG. 15. The coverage adjustment apparatus 30 includes a processing module 31 and a sending module 32.

The processing module 31 is configured to obtain coverage indication information.

The sending module 32 is configured to send the coverage indication information to a first network device.

It should be noted that the coverage adjustment apparatus provided in this embodiment of this application may perform technical solutions shown in the foregoing method embodiments. Implementation principles and beneficial effects of the coverage adjustment apparatus are similar to those of the technical solutions, and details are not described herein again.

In a possible implementation, the coverage indication information includes an identifier of a beam corresponding to the second network device and a beam status corresponding to the second network device.

In a possible implementation, the beam status includes at least one of a beam coverage state, a beam deployment status indicator, or beam replacing information.

In a possible implementation, the coverage indication information includes an identifier of a cell corresponding to the second network device, frequency information of the cell corresponding to the second network device, and a cell status corresponding to the second network device.

In a possible implementation, the cell status includes at least one of a cell coverage state, a cell deployment status indicator, and cell replacing information.

It should be noted that the coverage adjustment apparatus provided in this embodiment of this application may perform technical solutions shown in the foregoing method embodiments. Implementation principles and beneficial effects of the coverage adjustment apparatus are similar to those of the technical solutions, and details are not described herein again.

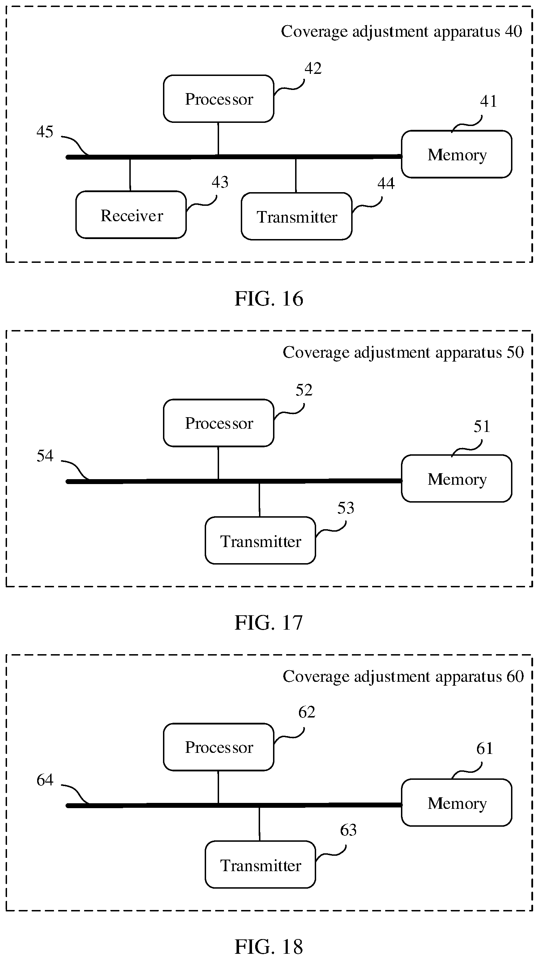

FIG. 16 is a schematic structural diagram of hardware of a coverage adjustment apparatus according to an embodiment of this application. The coverage adjustment apparatus 40 may be used for a first network device. Refer to FIG. 16. The coverage adjustment apparatus 40 includes a memory 41, a processor 42, a receiver 43, and a transmitter 44. The memory 41 communicates with the processor 42. For example, the memory 41, the processor 42, the receiver 43, and the transmitter 44 communicate with each other by using a communication bus 45. The memory 41 is configured to store a computer program, and the processor 42 executes the computer program to implement the method shown in the foregoing embodiment.

Optionally, the processor 42 has a function of the processing module 12 in the embodiment in FIG. 12, and may perform related steps that can be performed by the processing module 12. The receiver 43 has a function of the receiving module 11 in the embodiment in FIG. 12, and may perform related steps that can be performed by the receiving module 11. The transmitter 44 has a function of the sending module 13 in the embodiment in FIG. 13, and may perform related steps that can be performed by the sending module 13.

FIG. 17 is a schematic structural diagram of hardware of another coverage adjustment apparatus according to an embodiment of this application. The coverage adjustment apparatus 50 may be used for a terminal device. Refer to FIG. 17. The coverage adjustment apparatus 50 includes a memory 51, a processor 52, and a transmitter 53. The memory 51 communicates with the processor 52. For example, the memory 51, the processor 52, and the transmitter 53 communicate with each other by using a communication bus 54. The memory 51 is configured to store a computer program, and the processor 52 executes the computer program to implement the method shown in the foregoing embodiment.

Optionally, the processor 52 has a function of the processing module 21 in the embodiment in FIG. 14, and may perform related steps that can be performed by the processing module 21. The transmitter 23 has a function of the sending module 22 in the embodiment in FIG. 14, and may perform related steps that can be performed by the sending module 22.

FIG. 18 is a schematic structural diagram of hardware of still another coverage adjustment apparatus according to an embodiment of this application. The coverage adjustment apparatus 60 may be used for a second network device. Refer to FIG. 18. The coverage adjustment apparatus 60 includes a memory 61, a processor 62, and a transmitter 63. The memory 61 communicates with the processor 62. For example, the memory 61, the processor 62, and the transmitter 63 communicate with each other by using a communication bus 64. The memory 61 is configured to store a computer program, and the processor 62 executes the computer program to implement the method shown in the foregoing embodiment.

Optionally, the processor 62 has a function of the processing module 31 in the embodiment in FIG. 15, and may perform related steps that can be performed by the processing module 31. The transmitter 63 has a function of the sending module 32 in the embodiment in FIG. 15, and may perform related steps that can be performed by the sending module 32.

Optionally, the processor may be a central processing unit (Central Processing Unit, CPU), or may be another general-purpose processor, a digital signal processor (Digital Signal Processor, DSP), an application-specific integrated circuit (Application Specific Integrated Circuit, ASIC), or the like. The general-purpose processor may be a microprocessor, or the processor may be any conventional processor or the like. Steps of the methods disclosed with reference to this application may be directly performed and accomplished by a hardware processor, or may be performed and accomplished by a combination of hardware and a software module in a processor.

This application provides a storage medium. The storage medium is configured to store a computer program, and the computer program is used to implement the coverage adjustment method according to any one of the foregoing method embodiments.

This application provides a chip. The chip is configured to support a device (for example, a first network device, a terminal device, or a second network device) in implementing a function shown in the embodiments of this application. The chip is specifically used in a chip system. The chip system may include a chip, or may include a chip and another discrete device. When the chip in a receiving device implements the foregoing method, the chip includes a processing unit. Further, the chip may further include a communication unit. The processing unit may be, for example, a processor. When the chip includes the communication unit, the communication unit may be, for example, an input/output interface, a pin, or a circuit. The processing unit performs all or some of actions performed by the processing modules in the embodiments of this application, and the communication unit may perform a corresponding receiving or sending action. In another specific embodiment, the processing module of the receiving device in this application may be the processing unit of the chip, and a receiving module or a sending module of a control device may be the communication unit of the chip.

An embodiment of this application further provides a coverage adjustment system. The coverage adjustment system includes a terminal device and a network device. The network device may obtain measurement information for measuring a cell by the terminal device, and determine a beam coverage adjustment parameter of a first network device based on the measurement information. The measurement information includes channel state information CSI, radio resource management RRM information, and location information of the terminal device. The network device may perform the coverage adjustment methods shown in the embodiments in FIG. 5, FIG. 6, and FIG. 9. Details are not described herein again.

An embodiment of this application further provides another coverage adjustment system. The coverage adjustment system includes a first network device and a second network device. The first network device may obtain coverage indication information of the second network device, and determine a beam coverage adjustment parameter of the first network device based on the coverage indication information. The first network device may perform the coverage adjustment methods shown in the embodiments in FIG. 10 and FIG. 11. Details are not described herein again.

All or some of the steps in the method embodiments may be implemented by hardware related to program instructions. The foregoing program may be stored in a readable memory. When the program is executed, the steps in the foregoing method embodiments are performed. The foregoing memory (storage medium) includes: a read-only memory (English: read-only memory, ROM for short), a RAM, a flash memory, a hard disk, a solid-state drive, a magnetic tape (English: magnetic tape), a floppy disk (English: floppy disk), an optical disc (English: optical disc), and any combination thereof.

The embodiments of this application are described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processing unit of another programmable data processing device to generate a machine, so that instructions executed by the computer or the processing unit of the another programmable data processing device generate an apparatus for implementing a specific function in one or more processes in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to the embodiments of this application without departing from the spirit and scope of this application. This application is intended to cover these modifications and variations provided that they fall within the scope of protection defined by the following claims and their equivalent technologies.

In this application, the term "including" and a variant thereof may refer to non-limitative inclusion; and the term "or" and a variant thereof may refer to "and/or". In this application, the terms "first", "second", and the like are intended to distinguish between similar objects but do not necessarily indicate a specific order or sequence. In this application, "a plurality of' means two or more than two. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects.

## Claims

1. A coverage adjustment method, comprising:
obtaining, by a first network device, measurement information for measuring a cell by a terminal device, wherein the measurement information comprises channel state information CSI, radio resource management RRM information, and location information of the terminal device; and
determining, by the first network device, a beam coverage adjustment parameter of the first network device based on the measurement information.

2. The method according to claim 1, wherein the measurement information further comprises a measurement moment.

3. The method according to claim 1 or 2, wherein the RRM information comprises at least one of the following information: an identifier of the cell, a measurement result of the cell, a timing advance TA, or power headroom PHR.

4. The method according to claim 3, wherein the measurement result comprises a measurement result of a cell granularity and/or a measurement result of a beam granularity, and the measurement result of the cell granularity and the measurement result of the beam granularity comprise at least one of the following information: signal strength or signal quality.

5. The method according to any one of claims 1 to 4, wherein after the obtaining, by a first network device, measurement information for measuring a cell by a terminal device, the method further comprises:
determining, by the first network device, a coverage detection result of the cell based on the RRM information and the location information, wherein the coverage detection result comprises at least one of the following: weak coverage, overshoot coverage, or imbalance between uplink and downlink transmission.

6. The method according to any one of claims 1 to 5, wherein the cell comprises a serving cell of the terminal device and/or a neighboring cell of the serving cell.

7. The method according to any one of claims 1 to 6, wherein the method further comprises:
obtaining, by the first network device, coverage indication information of a second network device; and
determining, by the first network device, the beam coverage adjustment parameter of the first network device based on the coverage indication information.

8. The method according to claim 7, wherein the coverage indication information comprises an identifier of a beam corresponding to the second network device and a beam status corresponding to the second network device.

9. The method according to claim 8, wherein the beam status comprises at least one of a beam coverage state, a beam deployment status indicator, or beam replacing information.

10. The method according to claim 7, wherein the coverage indication information comprises an identifier of a cell corresponding to the second network device, frequency information of the cell corresponding to the second network device, and a cell status corresponding to the second network device.

11. The method according to claim 10, wherein the cell status comprises at least one of a cell coverage state, a cell deployment status indicator, and cell replacing information.

12. The method according to any one of claims 1 to 11, wherein the beam coverage adjustment parameter comprises at least one of the following parameters: a state of an antenna element, a phase difference of an antenna, or a precoding matrix of an antenna; and the state of the antenna element comprises an active state and an inactive state.

13. The method according to any one of claims 1 to 12, wherein the first network device is a CU, and the method further comprises:
sending, by the CU, the beam coverage adjustment parameter to a DU corresponding to the CU.

14. A coverage adjustment method, comprising:
obtaining, by a terminal device, measurement information for measuring a cell, wherein the measurement information comprises channel state information CSI, radio resource management RRM information, and location information of the terminal device; and
sending, by the terminal device, the measurement information to a network device.

15. The method according to claim 14, wherein the measurement information further comprises a measurement moment.

16. The method according to claim 14 or 15, wherein the RRM information comprises at least one of the following information: an identifier of the cell, a measurement result of the cell, a timing advance TA, or power headroom PHR.

17. The method according to claim 16, wherein the measurement result comprises a measurement result of a cell granularity and/or a measurement result of a beam granularity, and the measurement result of the cell granularity and the measurement result of the beam granularity comprise at least one of the following information: signal strength or signal quality.

18. A coverage adjustment apparatus, comprising a receiving module and a processing module, wherein
the receiving module is configured to obtain measurement information for measuring a cell by a terminal device, wherein the measurement information comprises channel state information CSI, radio resource management RRM information, and location information of the terminal device; and
the processing module is configured to determine a beam coverage adjustment parameter of a first network device based on the measurement information.

19. The apparatus according to claim 18, wherein the measurement information further comprises a measurement moment.

20. The apparatus according to claim 18 or 19, wherein the RRM information comprises at least one of the following information: an identifier of the cell, a measurement result of the cell, a timing advance TA, or power headroom PHR.

21. The apparatus according to claim 20, wherein the measurement result comprises a measurement result of a cell granularity and/or a measurement result of a beam granularity, and the measurement result of the cell granularity and the measurement result of the beam granularity comprise at least one of the following information: signal strength or signal quality.

22. The apparatus according to any one of claims 18 to 21, wherein
the processing module is further configured to: after the receiving module obtains the measurement information for measuring the cell by the terminal device, determine a coverage detection result of the cell based on the RRM information and the location information, wherein the coverage detection result comprises at least one of the following: weak coverage, overshoot coverage, or imbalance between uplink and downlink transmission.

23. The apparatus according to any one of claims 18 to 22, wherein the cell comprises a serving cell of the terminal device and/or a neighboring cell of the serving cell.

24. The apparatus according to any one of claims 18 to 23, wherein
the receiving module is further configured to obtain coverage indication information of a second network device; and
the processing module is further configured to determine the beam coverage adjustment parameter of the first network device based on the coverage indication information.

25. The apparatus according to claim 24, wherein the coverage indication information comprises an identifier of a beam corresponding to the second network device and a beam status corresponding to the second network device.

26. The apparatus according to claim 25, wherein the beam status comprises at least one of a beam coverage state, a beam deployment status indicator, or beam replacing information.

27. The apparatus according to claim 24, wherein the coverage indication information comprises an identifier of a cell corresponding to the second network device, frequency information of the cell corresponding to the second network device, and a cell status corresponding to the second network device.

28. The apparatus according to claim 27, wherein the cell status comprises at least one of a cell coverage state, a cell deployment status indicator, and cell replacing information.

29. The apparatus according to any one of claims 18 to 28, wherein the beam coverage adjustment parameter comprises at least one of the following parameters: a state of an antenna element, a phase difference of an antenna, or a precoding matrix of an antenna; and the state of the antenna element comprises an active state and an inactive state.

30. The apparatus according to any one of claims 18 to 29, wherein the first network device is a CU, and the apparatus further comprises a sending module, wherein
the sending module is configured to send the beam coverage adjustment parameter to a DU corresponding to the CU.

31. A coverage adjustment apparatus, comprising a processing module and a sending module, wherein
the processing module is configured to obtain measurement information for measuring a cell, wherein the measurement information comprises channel state information CSI, radio resource management RRM information, and location information of a terminal device; and
the sending module is configured to send the measurement information to a network device.

32. The apparatus according to claim 31, wherein the measurement information further comprises a measurement moment.

33. The apparatus according to claim 31 or 32, wherein the RRM information comprises at least one of the following information: an identifier of the cell, a measurement result of the cell, a timing advance TA, or power headroom PHR.

34. The apparatus according to claim 33, wherein the measurement result comprises a measurement result of a cell granularity and/or a measurement result of a beam granularity, and the measurement result of the cell granularity and the measurement result of the beam granularity comprise at least one of the following information: signal strength or signal quality.
